# EUROPÄISCHE PATENTSCHRIFT

(11) **EP 3 290 582 B1**
(45) Veröffentlichungstag und Bekanntmachung des Hinweises auf die Patenterteilung: **13.03.2019**
(21) Anmeldenummer: 16186077.0
(22) Anmeldetag: 29.08.2016
(51) Int. Cl.: D21F 7/04, B41F 33/18, B65H 26/02

(54) **VERFAHREN ZUM BETRIEB EINER MASCHINE ZUR HERSTELLUNG UND/ODER BEARBEITUNG EINER WARENBAHN**
METHOD FOR OPERATING A MACHINE FOR MANUFACTURING AND/OR TREATING A MATERIAL WEB
PROCÉDÉ DE FONCTIONNEMENT D'UNE MACHINE DESTINÉE A FABRIQUER ET/OU TRAITER UNE BANDE DE MATÉRIAU

(43) Veröffentlichungstag der Anmeldung: 07.03.2018
(73) Patentinhaber: Siemens Aktiengesellschaft, 80333 München (DE)
(72) Erfinder: Meier, Stefan Ingo, 91052 Erlangen (DE); Rasenack, Wolf-Martin, 91080 Marloffstein (DE)

(56) Entgegenhaltungen:
- DE-A1- 10 129 889
- DE-A1-102009 006 827

## Beschreibung

Die Erfindung betrifft ein Verfahren zum Betrieb einer Maschine zur Herstellung und/oder Bearbeitung einer Warenbahn, wobei die Maschine mindestens eine Antriebseinheit mit einem Antriebsmotor und einem Umrichter umfasst.

Bei der Herstellung und/oder Bearbeitung von Warenbahnen führt die Forderung nach einer Steigerung der Produktivität zu immer höheren Produktionsleistungen der Maschinen und infolgedessen auch zu immer höheren Geschwindigkeiten der Warenbahnen bzw. höheren Maschinengeschwindigkeiten.

Auf eine Warenbahn einwirkende Kräfte, die bei niedrigen Geschwindigkeiten noch unproblematisch sind, führen bei hohen Geschwindigkeiten zu Erscheinungen wie beispielsweise einem Flattern der Warenbahn und verursachen in Folge deren Abriss. Solche unkontrollierten und unerwünschten Abrisse haben immer einen Maschinenstillstand und somit einen Produktionsausfall zur Folge. Ein weiteres Problem in Verbindung mit derartigen Abrissen besteht darin, dass die Warenbahn unkontrolliert durch die Maschine oder einen Teilbereich der Maschine läuft, sofern das Auftreten eines Abrisses nicht schnell genug erkannt wird.

Entweder wird die Maschine oder es werden Teilbereiche der Maschine dabei mehr oder weniger mit der Warenbahn oder Teilen der Warenbahn verunreinigt oder blockiert, was gegebenenfalls zu langen Reinigungszeiten und/oder zu einer Beschädigung der Maschine, beispielsweise durch eine unerwünschte Aufwicklung eines abgerissenen Endes einer Warenbahn, führen kann.

Als typische Beispiele für Maschinen zur Herstellung und/oder Bearbeitung von Warenbahnen aus Papier, Karton, Kunststofffolie, Metallbahn oder -folie, Textilien oder Verbundwerkstoffen umfassend zwei oder mehr dieser Materialien sind unter anderem Papiermaschinen, Druckmaschinen, Rotationsstanzmaschinen, Rotationsschneidmaschinen, Walzstraßen und dergleichen zu nennen.

Verfahren und Vorrichtungen zur Erkennung eines Abrisses einer Warenbahn in einer Maschine zur Herstellung und/oder Bearbeitung der Warenbahn sind beispielsweise aus DE 42 16 653 A1 bereits bekannt, wobei es sich bei der Warenbahn um eine Papierbahn und bei der Maschine um eine Papiermaschine handelt. Die Papiermaschine weist eine Pressenpartie und eine Trockenpartie mit mehreren Trockengruppen auf, wobei die Papierbahn nach dem Durchlaufen der Trockenpartie aufgewickelt wird. Im Fall, dass ein Bereich mit freiem Papierbahnzug zwischen zwei Trockengruppen vorhanden ist, kann als Vorrichtung zur Erkennung eines Abrisses der Papierbahn eine Lichtschranke eingesetzt werden, deren Lichtstrahl auf die Papierbahn gerichtet wird. Das Funktionsprinzip der Lichtschranke besteht darin, dass die durch die Papierbahn bewirkte Unterbrechung des Lichtweges in Richtung eines optischen Sensors registriert wird. Bei einem Abriss der Papierbahn gelangt Licht zum Sensor, welcher nun ein elektrisches Signal generiert, durch das die gewünschten Handlungen eingeleitet werden. Für den Fall, dass eine Papiermaschine im Bereich zwischen den Trockengruppen keinen freien Papierzug aufweist, schlägt die DE 42 16 653 A1 vor, Abrissdetektoren im Bereich der Trockenpartie anzuordnen, um einen Abriss der Papierbahn im Bereich der Trockenpartie identifizieren zu können, in welchem die Papierbahn über einem Trockenfilz angeordnet ist. Ein Abrissdetektor weist eine Sende-/Empfangseinheit auf, wobei die Sendeeinheit sichtbares Licht auf die Papierbahn abstrahlt. Die Empfangseinheit empfängt das an der Papierbahn reflektierte Licht, welches in normierte Rot-, Grün- und Blau-Lichtwerte sowie gegebenenfalls in Helligkeitswerte zerlegt wird. Bei Auftreten eines Abrisses der Papierbahn wird das sichtbare Licht nicht mehr an der Papierbahn, sondern je nach Farbtönung des Trockenfilzes am Trockenfilz reflektiert, so dass die Empfangseinheit eine Veränderung des reflektierten Lichts erfasst, die zur Erkennung des Abrisses geeignet ist.

Solche bekannten Verfahren und Vorrichtungen zur Erkennung eines Abrisses einer Warenbahn in einer Maschine zur Herstellung und/oder Bearbeitung der Warenbahn basieren im Wesentlichen auf optischen Sensorsystemen, die unter rauen Fertigungsbedingungen schnell verschmutzen und somit oft gereinigt und nachjustiert werden müssen, um Fehlmessungen zu vermeiden. Aufgrund einer in der Regel lediglich punktuellen Anordnung optischer Sensorsysteme an einer Maschine werden eine schnelle Erkennung und zudem auch eine genaue Lokalisierung eines Abrisses verhindert. So kommt es bei den bekannten Verfahren und Vorrichtungen auf Basis optischer Sensorsysteme zur Erkennung eines Abrisses einer Warenbahn häufig zu unerwünschten Verzögerungen bei der Erkennung eines Abrisses oder zu keiner Erkennung des Abrisses, da abgerissenes Material der Warenbahn die Erkennung verhindert.

Aus der DE 10 2007 000 679 A1 ist zudem ein Verfahren zum Erfassen eines Risses und/oder zum Bestimmen eines Elastizitätsmoduls einer Materialbahn in einer Maschine zur Herstellung derselben bekannt. Die Materialbahn wird an einem ersten Fixpunkt mittels einer Antriebseinrichtung mit einer Soll-Geschwindigkeit angetrieben. Ein Maß entsprechend dem Elastizitätsmodul der Materialbahn wird bestimmt, indem ein Drehmomentverlauf eines Ist-Drehmoments der Antriebseinrichtung erfasst und ausgewertet wird. Zum Erfassen eines Papierrisses wird dabei ein Ansteigen des Ist-Drehmoments der Antriebsvorrichtung als Entscheidungskriterium verwendet. Alternativ wird ein Abfallen eines Ist-Drehmoments einer zweiten Antriebseinrichtung als Entscheidungskriterium verwendet.

Aus dem Artikel "Sensorless Tension Control in Paper Machines" von M. Anibal Valenzuela, John Martin Bentley und Robert D. Lorenz veröffentlicht in IEEE TRANSACTIONS ON INDUSTRY APPLICATIONS, VOL. 39, NO. 2, MARCH/APRIL 2003 geht zudem ein Verfahren zur Bestimmung eines Bahnzugs einer Papierbahn anhand der Stromsignale der Antriebe hervor. In einem ersten Schritt wird der Strom gemessen, wenn kein Bahnzug vorhanden ist, d.h. ohne Papierbahn. In einem zweiten Schritt werden die Strom-Variationen bei laufender Papierbahn gemessen.

DE 10 2009 006 827 A1 offenbart ein ähnliches Verfahren zum Erkennen eines Abrisses einer Warenbahn.

Es stellt sich die Aufgabe, eine bessere Erkennung eines Abrisses einer Warenbahn in einer Maschine zur Herstellung und/oder Bearbeitung der Warenbahn zu ermöglichen.

Die Aufgabe wird erfindungsgemäß gelöst durch ein Verfahren zum Betrieb einer Maschine zur Herstellung und/oder Bearbeitung einer Warenbahn, wobei die Maschine mindestens eine Antriebseinheit mit einem Antriebsmotor und einem Umrichter umfasst, wobei
- eine erste Antriebseinheit zur laufenden Fortbewegung der Warenbahn vom zugeordneten Umrichter mit einem Strom mit einem Grundverlauf versorgt wird,
- eine sich bei der Fortbewegung der Warenbahn über die Warenbahn ausbreitende Schwingung mittels der ersten Antriebseinheit erfasst wird,
- die Schwingung der Warenbahn vom Umrichter der ersten Antriebseinheit gemessen und in ein elektrisches Messsignal umgewandelt wird,
- das elektrische Messsignal von einer Auswertevorrichtung untersucht wird, ob eine Signatur vorhanden ist, die sich vom Grundverlauf des Stroms zur laufenden Fortbewegung der Warenbahn unterscheidet,
- bei Fehlen der über die Warenbahn ausgebreiteten Signatur bei der Auswertung des elektrischen Messsignals ein Bahnabriss erkannt wird.

Die in Bezug auf das Verfahren nachstehend angeführten Vorteile und bevorzugten Ausgestaltungen lassen sich sinngemäß auf die Steuervorrichtung und die Maschine zur Herstellung und/oder Bearbeitung einer Warenbahn übertragen.

Die Erfindung basiert auf der Idee, mechanische Schwingungen, die sich über die Warenbahn ausbreiten, zu erfassen und im Hinblick auf eine Bahnabriss-Erkennung auszuwerten. Die untersuchten Schwingungen können solche sein, die ohnehin in der Warenbahn vorhanden sind, z.B. ausgelöst durch die Bewegungen bzw. Unwuchten der mechanischen Komponenten der Maschine und übertragen auf die laufende Warenbahn über die mechanischen Komponenten. Die erfassten mechanischen Schwingungen können alternativ auch gezielt ins Material der Warenbahn eingeprägt werden.

Jede Antriebseinheit, umfassend insbesondere mindestens eine Rolle, einen Antriebsmotor, eine mechanische Verbindung zum Antriebsmotor und einen Umrichter, wird zur laufenden Fortbewegung der Warenbahn vom zugeordneten Umrichter mit Strom versorgt. Unter Umrichter wird hierbei insbesondere ein Frequenzumrichter verstanden. Bei einem Gleichstromantrieb ist darunter ein Stromrichter zu verstehen. Dieser Strom ist durch einen Grundlauf gekennzeichnet, d.h. durch charakteristische Amplitude, Frequenz und Signalform (i.d.R. sinusförmig). Zur Bestimmung des aktuellen Zustands der Warenbahn, insbesondere zur Bestimmung, ob ein Bahnabriss vorhanden ist, ist hierbei eine Kenntnis des Grundverlaufs erforderlich. Aus dem vom Umrichter eingespeisten Strom resultiert das gewünschte Drehmoment, welches direkt proportional zum Strom ist. Das Drehmoment wiederum hängt mit der Drehgeschwindigkeit und der Drehzahl des Antriebmotors zusammen, die somit ebenfalls zum Strom des Umrichters proportional sind.

Die mechanischen Schwingungen in der Warenbahn, unabhängig davon, ob sie passiv entstanden sind oder aktiv über die Steuerung der Antriebseinheiten generiert sind, werden von der Antriebseinheit in Form eines elektrischen Messsignals erfasst. Gemessen wird hierbei eine physikalische Größe wie z.B. ein Strom, ein Drehmoment oder eine Drehzahl. Das elektrische Messsignal, in welches die physikalische Größe zur Auswertung umgewandelt wird, ist ein Strom oder eine mit dem Strom korrelierende andere elektrische Messgröße, wie z.B. eine Spannung. Beispielsweise wird über Stromsensoren des Umrichters das elektrische Messsignal direkt als Strom ausgelesen. Alternativ, wenn eine andere Messgröße wie z.B. ein Drehmoment erfasst wird, wird diese für die weitere Auswertung in Strom umgewandelt. Bei der Auswertung stellen die untersuchten Schwingungen eine Signatur dar, welche additiv den Strom zur Fortbewegung der Warenbahn überlagert. Diese Signatur unterscheidet sich in zumindest einer Charakteristik vom Grundverlauf des vom Umrichter zur laufenden Fortbewegung der Warenbahn eingespeisten Stroms. Die Signatur kann somit extrahiert werden und eindeutig als separates Signal identifiziert werden.

Die Signatur wird schließlich verwendet, um einen Zustand der Warenbahn zu erkennen. Zunächst wird überprüft, ob die Signatur überhaupt im elektrischen Messsignal enthalten ist. Ein Fehlen der über die Warenbahn ausgebreiteten Signatur deutet darauf hin, dass die Warenbahn abgerissen ist und die Schwingung somit nicht erfasst werden konnte. Es sind in diesem Fall entsprechende Wartungsmaßen einzuleiten, um den normalen Betrieb der Maschine wieder herzustellen.

Beim Vorhandensein der zu erwartenden Signatur ist zunächst darauf zu schließen, dass die Warenbahn noch zumindest teilweise intakt ist. Die Messung der Signatur wird dann insbesondere bei weiteren Auswertungen herangezogen werden.

Relevant für die Auswertung sind lediglich die Schwingungen, welche sich über die Warenbahn ausbreiten. Schwingungen, welche z.B. über die mechanischen Verbindungen der verschiedenen Teile der Maschine zur Herstellung und/oder Bearbeitung der Warenbahn im Messsignal enthalten sind, werden bei der Auswertung nicht berücksichtigt.

Das Verfahren zeichnet sich dadurch aus, dass keine weiteren Sensoren, insbesondere keine optischen Sensoren zur Erfassung des Messsignals erforderlich sind. Die Messung erfolgt zudem unabhängig von einem Drehmoment oder eine Geschwindigkeit bzw. Geschwindigkeitsentwicklung der Antriebsmotoren über die Zeit. Darüber hinaus ist für die Detektion des Bahnabrisses keine Vergleichsmessung an der Maschine ohne laufende Warenbahn erforderlich. Das Verfahren kann somit im laufenden Betrieb einer vorhandenen Maschine ohne zusätzliche Hardware und ohne Unterbrechungen oder Störungen des Betriebs angewandt werden.

Gemäß einer bevorzugten Ausführungsvariante umfasst die Maschine mindestens zwei Antriebseinheiten und die Signatur wird über den Antriebsmotor einer zweiten Antriebseinheit in die Warenbahn eingeprägt. Es wird hierbei aktiv eine Signatur in Form eines zusätzlichen Stroms (oder beispielsweise eines zusätzlichen Drehmoments, welches mit dem Strom korrelierend ist), mit einem bekannten Verkauf generiert, diese Signatur wird über eine der Antriebseinheiten in die Warenbahn eingeprägt und über eine andere Antriebseinheit erfasst. Die wesentlichen Vorteile einer aktiven Einprägung einer Signatur in die Warenbahn, welche Signatur sich als eine Schwingung in Produktionsrichtung der Warenbahn sowie auch gegen die Produktionsrichtung ausbreitet, besteht darin, dass der Verlauf der Signatur zu jedem Zeitpunkt bekannt ist, die Stärke des Signals anpassbar ist, wodurch die eindeutige Detektion und Zuordnung der Signatur besonders einfach ist, selbst wenn der Verlauf der Signatur über die Zeit geändert wird .

Gemäß einer bevorzugten Ausführungsvariante weist die Signatur Frequenzanteile auf, die höher sind als eine Frequenz des Grundlaufs des vom Umrichter eingespeisten Stroms. Dank der höheren Frequenz der Signatur ist eine schnellere Detektion der Signatur möglich, da zum Erkennen der Signatur weniger Zeit benötigt wird als bei einer Signatur mit einer niedrigeren Frequenz.

Zweckdienlicherweise wird die eingeprägte Signatur nach Art eines sinus-, block- oder pulsförmigen Stroms generiert. Diese Signatur ist additiv überlagert zum Strom, mit dem der Antriebsmotor vom Umrichter versorgt wird. Durch die vorgegebene, charakteristische Form der Signatur ist es anschließend besonders leicht die Signatur zu extrahieren.

Im Hinblick auf eine genaue Lokalisierung eines Abrisses der Warenbahn wird vorteilhafterweise über die Antriebseinheiten jeweils eine unterschiedliche Signatur in die Warenbahn eingeprägt. Wenn mehrere Antriebseinheiten in der Maschine vorhanden sind und von jeder Antriebseinheit eine andere Signatur eingeprägt wird, erfolgt eine eindeutige Zuordnung der jeweiligen Signaturen zu den Antriebseinheiten. Bei einem Bahnabriss zwischen zwei benachbarten Antriebseinheiten wird dann zumindest eine der Antriebseinheiten die Signatur von der benachbarten Antriebseinheit nicht empfangen können. Die Stelle des Bahnrisses wird somit genau zwischen diesen beiden Antriebseinheiten lokalisiert.

Vorzugsweise sind mindestens drei Antriebseinheiten vorgesehen, wobei die Auswertung der Signatur einer mittleren Antriebseinheit sowohl in eine Produktionsrichtung der Warenbahn als auch gegen die Produktionsrichtung durchgeführt wird. Hierbei wird eine besonders umfangreiche und zuverlässige Auswertung durchgeführt, denn die eingeprägte Signatur jeder Antriebseinheit, die sich zwischen zwei weiteren Antriebseinheiten befindet, wird beidseitig von den benachbarten Antriebseinheiten ausgelesen und ausgewertet. Die Stelle des Bahnabrisses kann somit besonders zuverlässig nicht nur in Produktionsrichtung, sondern auch gegen die Produktionsrichtung lokalisiert werden.

Bevorzugt wird beim Vorhandensein der Signatur auf Grundlage einer Amplitude der Signatur ein Bahnzug der Warenbahn bestimmt. Dies geschieht unter Berücksichtigung von physikalischen Größen der Warenbahn sowie vom Übertragungsverhalten der Warenbahn. Unter physikalischen Größen und Übertragungsverhalten der Warenbahn werden insbesondere eine Breite und eine Dicke der Warenbahn verstanden sowie eine Zusammensetzung des Materials, welche das Schwingverhalten der Warenbahn beeinflusst. Weiterhin können insbesondere eine Materialtemperatur, eine Umgebungstemperatur, ein Wasseranteil im Material und/oder eine Luftfeuchtigkeit herangezogen werden. Dabei gilt grundsätzlich, dass je straffer die Warenbahn gespannt ist, desto geringer ist Dämpfung über die Bahnlänge und desto besser kann sich die Signatur ausbreiten. In diesem Fall wird eine höhere Amplitude der Signatur gemessen als im Falle, dass die Warenbahn durchhängt und die Signatur gedämpft wird. Auf Grundlage der gemessenen Amplitude wird, unter Heranziehung der bekannten physikalischen Zusammenhänge zwischen den oben genannten Größen, der Bahnzug der Warenbahn bzw. seine Entwicklung über die Zeit quantitativ ermittelt.

Weiterhin bevorzugt wird die Bestimmung des Bahnzugs für eine Steuerung und/oder Regelung eines Betriebsparameters zumindest eines Antriebsmotors verwendet. Unter Betriebsparameter wird hierbei beispielsweise die Drehgeschwindigkeit, das Drehmoment oder die Drehzahl bzw. alle weiteren Größen, die damit korrelierend sind, verstanden. Aufgrund der Messung der Signatur und somit des Bahnzugs wird hierbei zumindest ein Betriebsparameter angepasst, beispielsweise wird bei wachsender Dämpfung der Signatur der Bahnzug erhöht und umgekehrt, bei einer ansteigenden Amplitude der Signatur wird der Bahnzug automatisch reduziert.

Vorteilhafterweise wird das Verfahren an einer Warenbahn aus Papier, Metall, Folie oder textilem Material durchgeführt. Entsprechend ist die Maschine zur Herstellung und/oder Bearbeitung einer Warenbahn bevorzugt eine Papiermaschine, eine Druckmaschine, eine Walzstraße zur Herstellung von Metall, eine Rotationsstanzmaschine und/oder eine Rotationsschneidemaschine erkannt wird. Die Durchführung des Verfahrens ist nicht auf die oben genannten Warenbahnen und Maschinen eingeschränkt, die obige Aufzählung ist lediglich beispielhaft und nicht abschließend.

Ein Ausführungsbeispiel der Erfindung wird anhand einer Zeichnung näher erläutert. Hierin zeigen schematisch und stark vereinfacht:
- FIG 1: eine Maschine zur Herstellung und/oder Bearbeitung einer Warenbahn, und
- FIG 2: den zeitlichen Verlauf eines mit einer Signatur überlagerten Stroms.

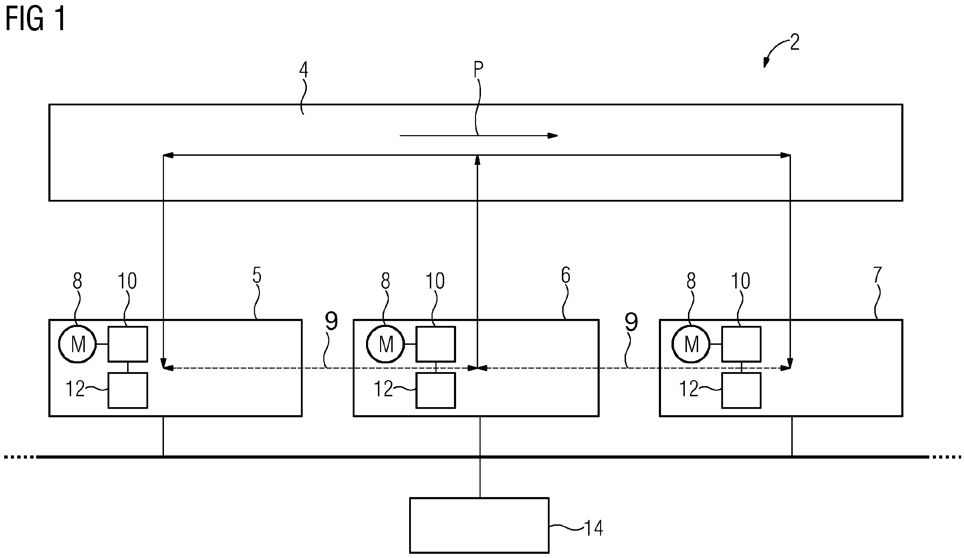

In FIG 1 ist schematisch eine Maschine 2 zur Herstellung und/oder Bearbeitung einer kontinuierlichen Warenbahn 4, insbesondere eine Papiermaschine zur Herstellung einer Papierbahn, dargestellt. Die Papiermaschine 2 umfasst mehrere Antriebseinheiten 5, 6, 7, von denen lediglich drei dargestellt sind. Jede Antriebseinheit 5, 6, 7 weist einen Antriebsmotor 8 auf, der von einem Umrichter 10 zur laufenden Fortbewegung der Warenbahn 4 in eine Produktionsrichtung P mit Strom I versorgt wird. Die Maschine 2 umfasst weiterhin Auswertevorrichtungen 12, die im gezeigten Ausführungsbeispiel dem jeweiligen Umrichter 10 zugeordnet sind. Darüber hinaus ist eine Steuervorrichtung 14 für die Steuerung bzw. Regelung der Papiermaschine 2 vorgesehen. Die Antriebseinheiten 5, 6, 7 können auch untereinander kommunizieren, was durch die gestrichelten Pfeile 9 angedeutet ist.

Entlang der Warenbahn 4 propagieren im Betrieb der Papiermaschine 2 mechanische Schwingungen. In der Regel sind mehrere, additiv überlagerte Schwingungen vorhanden, denen verschiedene Ursachen zugrunde liegen. Diese können passiv (d.h. ohne gezielte Einwirkung der Steuervorrichtung 14) durch Bewegungen oder Vibrationen der mechanischen Komponenten der Papiermaschine 2 im Betrieb entstanden sein. Alternativ können die Schwingungen aktiv von einem Umrichter 10 generiert und über die Antriebseinheiten 5, 6, 7 ins Material der Warenbahn 4 eingeprägt werden. In beiden Fällen werden die Schwingungen der Warenbahn 4 als ein elektrisches Messsignal, insbesondere als Strom oder als eine mit dem Strom korrelierende Größe von einer Auswertevorrichtung 12 ausgelesen. Das elektrische Messsignal wird anschließend im Hinblick auf eine zu erwartenden Schwingung bzw. Signatur S durch die Auswertevorrichtung 12 ausgewertet.

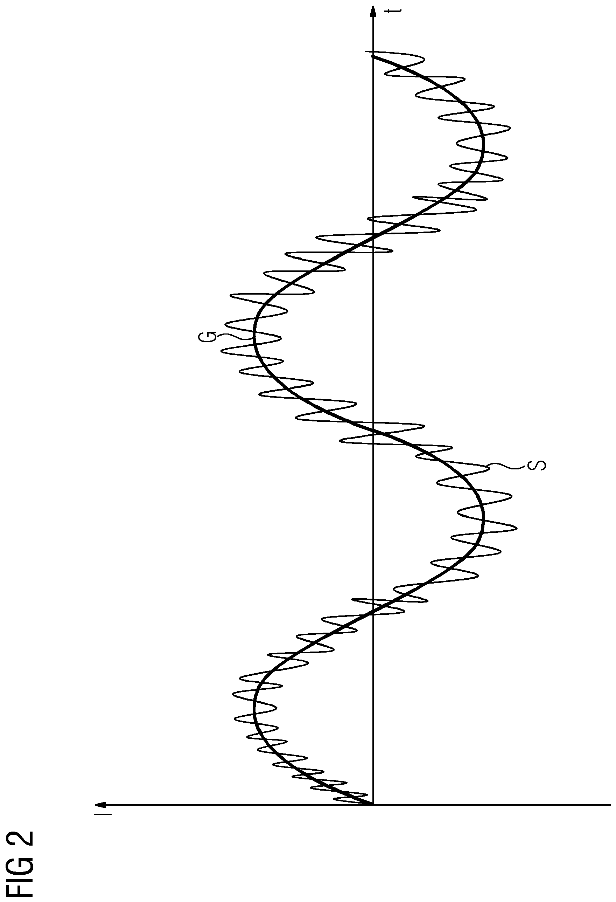

Diese Situation ist aus der Darstellung des Stromverlaufs I über die Zeit t gemäß FIG 2 ersichtlich. Der Strom I, der vom Umrichter 10 in den Antriebsmotor 8 eingespeist wird, weist einen Grundverlauf G auf, der insbesondere durch eine Frequenz, eine Amplitude und eine Form (hier sinusförmig) charakterisiert ist. Dem Strom I ist additiv die Signatur S überlagert. Die Signatur S ist derart gewählt, dass sie sich von einem Grundverlauf G des Stroms der Antriebseinheit 5, 6, 7, bei der die Schwingungen gemessen werden, unterscheidet. Im gezeigten Ausführungsbeispiel weist die eine niedrigere Amplitude und eine höhere Frequenz als die des Grundverlaufs auf.

Fehlt bei der Auswertung durch die Auswertevorrichtung 12 die Signatur S, ist dies ein Indiz auf einen Bahnabriss vor der Antriebseinheit 5, 6, 7, an welcher die Messung durchgeführt wird.

Ist die Signatur S auslesbar, wird sie von der Auswertevorrichtung 12 insbesondere für weitere Auswertungen herangezogen. Beispielsweise wird anhand einer Amplitude der gemessenen Signatur S ein Bahnzug der Warenbahn durch die Steuervorrichtung 14 berechnet und geregelt.

Eine besonders zuverlässige Erkennung eines Bahnabrisses der Warenbahn 4 wird erreicht, indem die Signatur S von einer ersten Antriebseinheit 5 erzeugt und in die Warenbahn 4 eingeprägt wird und von einer zweiten, insbesondere benachbarten Antriebseinheit 6 ausgelesen und ausgewertet wird. Wenn die Signatur S nicht bei der benachbarten Antriebseinheit ankommt, befindet sich die Stelle des Bahnabrisses zwischen den beiden Antriebseinheiten 5, 6.

Insbesondere wird von jeder Antriebseinheit 5, 6, 7 eine unterschiedliche Signatur S erzeugt, welche sowohl in Produktionsrichtung P als auch entgegen der Produktionsrichtung P von den angrenzenden Antriebseinheiten 5, 6, 7 detektiert wird. Beispielsweise wird gemäß FIG 1 von der mittleren Antriebseinheit 6 eine spezifische Signatur S mit einer Frequenz von 60 Hz in die Warenbahn 4 eingeprägt, welche sowohl von der Antriebseinheit 5 als auch von der Antriebseinheit 7 ausgelesen wird. Vom Umrichter 10 der Antriebseinheit 5 wird eine weitere Signatur mit einer Frequenz von 50 Hz und vom Umrichter 10 der Antriebseinheit 5 wird eine dritte Signatur mit einer Frequenz von 70 Hz in die Warenbahn 4 eingeprägt. Die Signaturen der Antriebseinheiten 5 und 7 werden beide von der Antriebseinheit 6 ausgelesen. Aufgrund der unterschiedlichen Frequenz der Signaturen ist die Zuordnung der Signaturen zur jeweiligen Antriebseinheit 5, 7 eindeutig.

Die eingeprägten Signaturen S weisen beispielsweise einen sinus-, block- oder pulsförmigen Stromverlauf auf. Zudem sind die durch Frequenzanteile gekennzeichnet, die höher sind als eine Frequenz des Grundlaufs G des vom Umrichter 10 eingespeisten Stroms I gekennzeichnet. Denkbar ist ebenfalls nicht-periodische Signaturen S zu erzeugen, deren Verlauf zeitlich veränderbar ist oder solche, bei denen bestimmte periodische Sequenzen alternierend wiederholbar sind. Bei aktiv eingeprägten Signaturen S ist deren Verlauf stets bekannt, so dass ein Erkennen der Signatur S unabhängig von den Variationen ihres Verlaufs problemlos möglich ist.

## Patentansprüche

1. Verfahren zum Betrieb einer Maschine (2) zur Herstellung und/oder Bearbeitung einer Warenbahn (4), wobei die Maschine mindestens eine Antriebseinheit (5, 6, 7) mit einem Antriebsmotor (8) und einem Umrichter (10) umfasst, wobei
- eine erste Antriebseinheit (5, 6, 7) zur laufenden Fortbewegung der Warenbahn (4) vom zugeordneten Umrichter (10) mit einem Strom (I) mit einem Grundverlauf (G) versorgt wird,
- eine sich bei der Fortbewegung der Warenbahn (4) über die Warenbahn (4) ausbreitende Schwingung mittels der ersten Antriebseinheit (5, 6, 7) erfasst wird,
- die Schwingung der Warenbahn (4) vom Umrichter (10) der ersten Antriebseinheit gemessen und in ein elektrisches Messsignal umgewandelt wird,
- das elektrische Messsignal von einer Auswertevorrichtung (12) untersucht wird, ob eine Signatur (S) vorhanden ist, die sich vom Grundverlauf (G) des Stroms (I) zur laufenden Fortbewegung der Warenbahn (4) unterscheidet,
- bei Fehlen der über die Warenbahn (4) ausgebreiteten Signatur (S) bei der Auswertung des elektrischen Messsignals ein Bahnabriss erkannt wird.

2. Verfahren nach Anspruch 1,
wobei die Maschine (2) mindestens zwei Antriebseinheiten (5, 6, 7) umfasst und die Signatur (S) über den Antriebsmotor (8) einer zweiten Antriebseinheit (5, 6, 7) in die Warenbahn (4) eingeprägt wird.

3. Verfahren nach Anspruch 1 oder 2,
wobei die Signatur (S) Frequenzanteile aufweist, die höher sind als eine Frequenz des Grundverlaufs (G) des vom Umrichter (10) eingespeisten Stroms (I).

4. Verfahren nach Anspruch 2 oder 3,
wobei die eingeprägte Signatur (S) nach Art eines sinus-, block- oder pulsförmigen Stroms generiert wird.

5. Verfahren nach einem der Ansprüche 2 bis 4,
wobei über die Antriebseinheiten (5, 6, 7) jeweils eine unterschiedliche Signatur (S) in die Warenbahn (4) eingeprägt wird.

6. Verfahren nach einem der vorhergehenden Ansprüche,
wobei mindestens drei Antriebseinheiten (5, 6, 7) vorgesehen sind und wobei die Auswertung der Signatur (S) einer mittleren Antriebseinheit (5, 6, 7) sowohl in eine Produktionsrichtung (P) der Warenbahn als auch gegen die Produktionsrichtung (P) durchgeführt wird.

7. Verfahren nach einem der vorhergehenden Ansprüche,
wobei beim Vorhandensein der Signatur (S) auf Grundlage einer Amplitude der Signatur (S) ein Bahnzug der Warenbahn (4) bestimmt wird.

8. Verfahren nach Anspruch 7,
wobei die Bestimmung des Bahnzugs für eine Steuerung und/oder Regelung eines Betriebsparameters zumindest eines Antriebsmotors (8) verwendet wird.

9. Verfahren nach einem der vorhergehenden Ansprüche,
welches an einer Warenbahn (4) aus Papier, Metall, Folie oder textilem Material durchgeführt wird.

## Claims

1. Method for the operation of a machine (2) for producing and/or processing a material web (4), wherein the machine comprises at least one drive unit (5, 6, 7) with a drive motor (8) and a converter (10), wherein
- a first drive unit (5, 6, 7) is supplied by the assigned converter (10) with a current (I) having a basic waveform (G) for the continuous movement of the material web (4),
- a vibration propagating over the material web (4) during the movement of the material web (4) is captured by means of the first drive unit (5, 6, 7),
- the vibration of the material web (4) is measured by the converter (10) of the first drive unit and transformed into an electrical measurement signal,
- the electrical measurement signal is examined by an evaluation device (12) for the presence of a signature (S) which differs from the basic waveform (G) of the current (I) for the continuous movement of the material web (4),
- a web tear is identified if the signature (S) propagating over the material web (4) is missing during the evaluation of the electrical measurement signal.

2. Method according to claim 1,
wherein the machine (2) comprises at least two drive units (5, 6, 7) and the signature (S) is introduced into the material web (4) via the drive motor (8) of a second drive unit (5, 6, 7) .

3. Method according to claim 1 or 2,
wherein the signature (S) has frequency components which are higher than a frequency of the basic waveform (G) of the current (I) that is fed in by the converter (10).

4. Method according to claim 2 or 3,
wherein the signature (S) that is introduced is generated as a type of current having a sinusoidal, blocked or pulsed form.

5. Method according to one of claims 2 to 4,
wherein a different signature (S) is introduced into the material web (4) in each case via the drive units (5, 6, 7).

6. Method according to one of the preceding claims,
wherein at least three drive units (5, 6, 7) are provided and wherein the evaluation of the signature (S) of a central drive unit (5, 6, 7) is performed both in a production direction (P) of the material web and against the production direction (P).

7. Method according to one of the preceding claims,
wherein if the signature (S) is present a web tension of the material web (4) is determined on the basis of an amplitude of the signature (S).

8. Method according to claim 7,
wherein the determination of the web tension is used for open-loop control and/or closed-loop control of an operating parameter of at least one drive motor (8).

9. Method according to one of the preceding claims,
being performed on a material web (4) made of paper, metal, film/foil or textile material.

## Revendications

1. Procédé pour faire fonctionner une machine (2) de production et/ou de traitement d'une bande (4) de matériau, la machine comprenant au moins une unité (5, 6, 7) d'entraînement, ayant un moteur (8) d'entraînement et un onduleur (10), dans lequel
- une première unité (5, 6, 7) d'entraînement, pour faire avancer en continu la bande (4) de matériau, est alimentée par l'onduleur (10) associé en un courant (I) ayant une courbe (G) de base,
- on détecte, au moyen de la première unité (5, 6, 7) d'entraînement, une oscillation se propageant sur la bande (4) de matériau lors de l'avance de la bande (4) de matériau,
- on mesure l'oscillation de la bande (4) de matériau par l'onduleur (10) de la première unité d'entraînement et on la transforme en un signal électrique de mesure,
- on étudie le signal électrique de mesure par un système (12) d'exploitation pour savoir si est présente une signature (S), qui se distingue de la courbe (G) de base du courant (I) pour l'avance en continu de la bande (4) de matériau,
- en l'absence de la signature (S) propagée sur la bande (4) de matériau, on détecte, lors de l'exploitation du signal électrique de mesure, une déchirure de la bande.

2. Procédé suivant la revendication 1,
dans lequel la machine (2) comprend au moins deux unités (5, 6, 7) d'entraînement et on imprime la signature (S) dans la bande (4) de matériau, par le moteur (8) d'entraînement d'une deuxième unité (5, 6, 7) d'entraînement.

3. Procédé suivant la revendication 1 ou 2,
dans lequel la signature (S) a des parties de fréquence, qui sont plus hautes qu'une fréquence de la courbe (G) de base du courant (I) injecté par l'onduleur (10).

4. Procédé suivant la revendication 2 ou 3,
dans lequel on produit la signature (S) imprimée à la manière d'un courant sinusoïdal en forme de blocs ou d'impulsions.

5. Procédé suivant l'une des revendications 2 à 4,
dans lequel on imprime, par les unités (5, 6, 7) d'entraînement, respectivement une signature (S) différente dans la bande (4) de matériau.

6. Procédé suivant l'une des revendications précédentes,
dans lequel il est prévu au moins trois unités (5, 6, 7) d'entraînement et dans lequel on effectue l'exploitation de la signature (S) d'une unité (5, 6, 7) d'entraînement médiane, tant dans le sens (P) de production de la bande de matériau qu'également dans le sens contraire.

7. Procédé suivant l'une des revendications précédentes,
dans lequel, en présence de la signature (S), on détermine, sur la base d'une amplitude de la signature (S), une traction de la bande (4) de matériau.

8. Procédé suivant la revendication 7,
dans lequel on utilise la détermination de la traction de la bande pour une commande et/ou une régulation d'un paramètre de fonctionnement d'au moins un moteur (8) d'entraînement.

9. Procédé suivant l'une des revendications précédentes,
dans lequel on l'effectue sur une bande (4) de matériau en papier, en métal, en feuille ou en matière textile.
